# FASCICULE DE BREVET EUROPEEN

(11) **EP 0 780 922 B1**
(45) Date de publication et mention de la délivrance du brevet: **12.01.2000**
(21) Numéro de dépôt: 96402408.7
(22) Date de dépôt: 12.11.1996
(51) Int. Cl.: H01R 4/30, B23K 11/14

(54) **Pièce anti-rotation pour cosse de connexion électrique et assemblage soudé de cette pièce et d'un élément quelconque**
Verdrehsicherrungsvorrichtung für elektrische Kabelschuh und Schweissverbindung für dieses Teil mit einem anderen Element
Antirotation device for electric cable terminal and welded assembly of this part with another element

(30) Priorité: 20.12.1995 FR 9515185
(43) Date de publication de la demande: 25.06.1997
(73) Titulaire: RAPID S.A., F-75017 Paris (FR)
(72) Inventeur: Léon, Jean-Pierre, 78800 Houilles (FR)
(74) Mandataire: Durand, Yves Armand Louis

(56) Documents cités:
- EP-A- 0 481 641
- EP-A- 0 487 365
- DE-A- 1 475 202
- FR-A- 1 196 383
- FR-A- 2 693 842
- US-A- 4 873 411

## Description

La présente invention a essentiellement pour objet une pièce anti-rotation pour cosse de connexion électrique.

Elle vise également l'assemblage soudé de cette pièce et d'un élément quelconque.

On a déjà proposé des pièces anti-rotation pour cosse de connexion électrique comprenant, d'une manière générale, une embase qui, d'une part, est pourvue d'une ouverture pour le passage d'une vis et qui, d'autre part, comporte sur son pourtour et en saillie de l'une des faces de l'embase, des dents définissant entre elles des créneaux correspondant à autant de positions angulaires pour la cosse. Ainsi, cette dernière demeure toujours bloquée en rotation entre deux dents pour une position d'orientation initialement choisie.

Toutefois, les pièces anti-rotation antérieures étaient d'une structure relativement compliquée et coûteuse, et ne permettaient pas une fixation directe de la cosse sur elles et sur un organe quelconque, tel que par exemple un organe de véhicule. Dès lors, ces pièces antérieures ne pouvaient pas prétendre assurer une excellente liaison électrique en toutes circonstances.

Aussi, la présente invention a pour but de remédier à ces inconvénients en proposant une pièce anti-rotation qui constitue une pièce unique, peu coûteuse à fabriquer et susceptible d'assurer toujours un bon contact électrique entre la cosse et l'élément sur lequel la pièce est fixée.

A cet effet, l'invention a pour objet une pièce anti-rotation pour cosse de connexion électrique et du type comprenant une embase qui d'une part est pourvue d'une ouverture pour le passage d'une vis et qui, d'autre part, comporte sur son pourtour et en saillie de l'une de ses faces, des dents définissant entre elles autant de créneaux correspondant à autant de positions angulaires pour la cosse, caractérisée en ce que la face de l'embase opposée à celle comportant les dents est munie d'un fût s'étendant au droit de ladite ouverture et d'une pluralité de bossages ou analogues permettant le soudage de l'embase sur un élément quelconque traversé par ledit fût.

Cette pièce est encore caractérisée en ce que le fût précité est intérieurement lisse et taraudable par la vis précitée.

Suivant un mode de réalisation préféré, l'embase précitée comporte un bossage au niveau de la racine de chaque dent.

La pièce selon cette invention est encore caractérisée en ce que les bossages précités résultent d'un emboutissage pratiqué sur l'embase.

Suivant un exemple de réalisation préféré, l'embase présente la forme d'un triangle dont chaque sommet comporte une dent à la racine de laquelle est prévu un bossage.

Mais d'autres caractéristiques et avantages de l'invention apparaîtront mieux dans la description détaillée qui suit et se réfère aux dessins annexés, donnés uniquement à titre d'exemple, et dans lesquels :

La figure 1 est une vue éclatée et en perspective d'un assemblage réalisé avec une pièce anti-rotation selon cette invention et représentée elle aussi en perspective.

La figure 2 est une vue en élévation et coupe des éléments représentés sur la figure 1 en position assemblée, c'est-à-dire en position soudée de la pièce anti-rotation sur un élément quelconque à relier électriquement avec la cosse retenue sur ladite pièce par une vis.

On voit sur les figures une pièce anti-rotation 1 pouvant recevoir une cosse 2 de connexion électrique, et se composant essentiellement d'une embase 3 qui comporte sur son pourtour une pluralité de dents 4 faisant saillie de l'une 10 des deux faces opposées 10, 20 de l'embase 3.

Ainsi, les dents 4 définissent entre elles des créneaux 5 correspondant à autant de positions angulaires pour la cosse 2 qui, comme connu en soi, est solidaire d'un conducteur électrique 6.

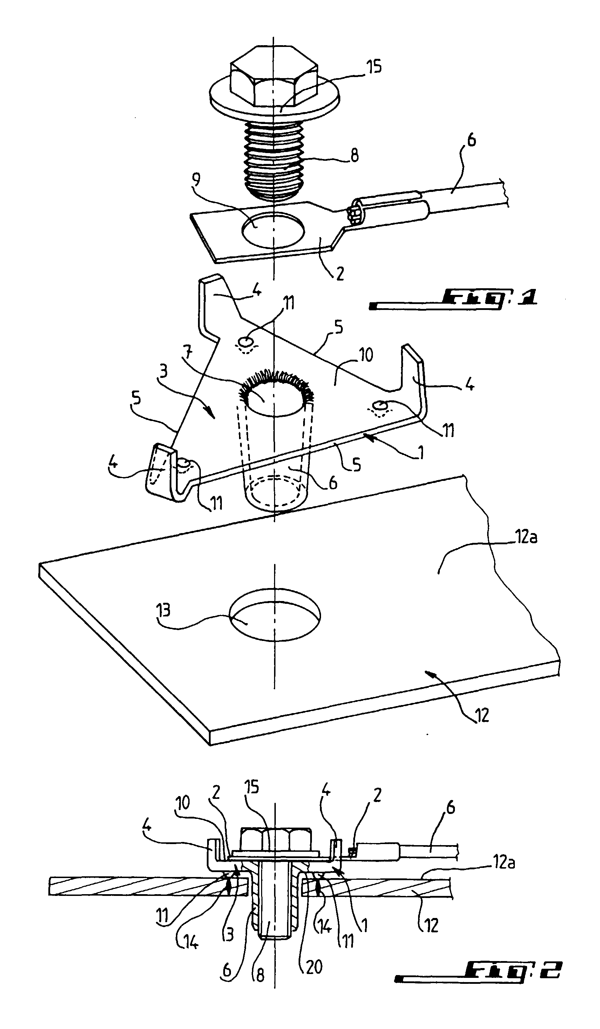

Conformément à l'invention, la face 20 de l'embase 3, opposée à la face 10 portant les dents 4, est pourvue d'un fût 6 venant de matière avec ladite embase et débouchant dans celle-ci par une ouverture 7 permettant le passage d'une vis 8. La vis 8 peut également traverser la cosse 2 qui comporte à cet effet un orifice 9, que l'on voit bien sur la figure 1.

Suivant une réalisation préférée, le fût 6 est intérieurement lisse et taraudable par la vis 8 qui est donc une vis auto-taraudeuse.

La face 20 de l'embase 3 comporte également une pluralité de bossages ou analogues 11 destinés à permettre le soudage de l'embase 3 par sa face 20 sur un élément quelconque 12, revêtant ici la forme d'un panneau, cet élément comportant un trou 13 pour le passage du fût 6 avant fixation par soudage de l'embase 3 sur l'élément 12, comme on le décrira en détail plus loin.

Suivant une réalisation préférée, on prévoit un bossage tel que 11 au niveau de la racine de chaque dent 4, comme on le voit bien sur la figure 1.

Les bossages 11 sont par exemple réalisés par une opération d'emboutissage sur l'embase 3, étant bien entendu que, sans sortir du cadre de l'invention, ils pourraient être réalisés d'une autre manière et avoir une forme autre que la forme circulaire représentée.

L'embase 3, suivant l'exemple représenté, présente la forme d'un triangle dont chaque sommet comporte une dent 4, pour ainsi définir trois créneaux 5, de sorte que la cosse 2 peut être positionnée dans le créneau désiré, suivant l'orientation que l'on veut donner au conducteur 6.

Au niveau de la racine de chacune des trois dents 4, est prévu un bossage 11 faisant saillie de la face 20 de l'embase 3, comme expliqué précédemment.

On comprend de ce qui précède que l'assemblage visible sur la figure 2 est réalisé de la façon suivante.

La pièce anti-rotation 1 est introduite par son fût 6 dans le trou 13 de l'élément 12, et l'embase 3 repose ainsi par l'intermédiaire des bossages 11 sur la face 12a de l'élément 12.

On effectue alors le soudage de l'embase 3 de l'élément 12, par l'intermédiaire des bossages 11, comme cela est montré en 14 sur la figure 2.

L'élément 12 et la pièce anti-rotation 1 étant donc solidaires l'un de l'autre, on positionne la cosse 2 dans un créneau 5 entre deux dents 4, suivant l'orientation désirée, puis la vis 8 passant dans l'orifice 9 de la cosse 2 est vissée dans le fût 6 qui sera taraudé sous l'effet du vissage.

La tête 15 de la vis 8 retiendra par conséquent la cosse 2 contre l'embase 3 de la pièce anti-rotation 1, laquelle embase 3 est soudée par les bossages 11 à l'élément 12.

C'est dire qu'un excellent contact électrique ou de masse sera, en toute circonstance, établi entre le fil conducteur 6 et l'élément 12 qui peut revêtir une forme quelconque.

On a donc réalisé suivant l'invention une pièce anti-rotation 1 constituant une pièce unique qui est peu coûteuse à fabriquer, très simple à monter et susceptible d'assurer une excellente liaison électrique entre un câble et un élément ou organe quelconque.

Bien entendu, l'invention n'est nullement limitée au mode de réalisation décrit et illustré qui n'a été donné qu'à titre d'exemple.

C'est ainsi que la forme de l'embase pourrait être quelconque, de même que le nombre et la forme des dents sur le pourtour de cette embase. Il en est de même pour ce qui concerne les bossages faisant saillie de la face de l'embase opposée à celle portant les dents assurant le blocage en rotation de la cosse de connexion électrique lors du vissage de la vis.

C'est dire que l'invention comprend tous les équivalents techniques des moyens décrits ainsi que leurs combinaisons, si celles-ci entrent dans le cadre des revendications qui suivent.

## Revendications

1. Pièce anti-rotation (1) pour cosse (2) de connexion électrique et du type comprenant une embase (3) qui d'une part est pourvue d'une ouverture (7) pour le passage d'une vis (8) et qui, d'autre part, comporte sur son pourtour et en saillie de l'une (10) de ses faces, des dents (4) définissant entre elles autant de créneaux (5) correspondant à autant de positions angulaires pour la cosse (2), caractérisée en ce que la face (20) de l'embase (3) opposée à celle (10) comportant les dents (4) est d'une part munie d'un fût (6) intérieurement lisse taraudable par la vis (8) et s'étendant au droit de ladite ouverture (7) et, d'autre part d'une pluralité de bossages ou analogues (11) permettant le soudage de l'embase (3) sur un élément quelconque (12) traversé par ledit fût (6).

2. Pièce selon la revendication 1, caractérisée en ce que l'embase précitée (3) comporte un bossage (11) au niveau de la racine de chaque dent (4).

3. Pièce selon la revendication 1 ou 2, caractérisée en ce que les bossages précités (11) résultent d'un emboutissage pratiqué sur l'embase (3).

4. Pièce selon l'une des revendications précédentes, caractérisée en ce que l'embase précitée (3) présente la forme d'un triangle dont chaque sommet comporte une dent (4) à la racine de laquelle est prévu un bossage (11).

5. Assemblage soudé de la pièce selon l'une des revendications 1 à 4, et d'un élément quelconque (12).

## Patentansprüche

1. Antirotationsteil (1) für elektrische Verbindungskausche (2) und von der Art, die eine Fußplatte (3) umfaßt, die einerseits mit einer Öffnung (7) für den Durchgang einer Schraube (8) versehen ist, und die, andererseits, auf ihrem äußerem Umfang und vorspringend (10) aus einer ihrer Seiten Zacken (4) umfaßt, die untereinander ebenso viele Scharten (5) definieren, wie sie Winkelpositionen der Kausche (2) entsprechen, dadurch gekennzeichnet, daß die Seite (20) der Fußplatte (3) gegenüber derjenigen (10), die die Zacken (4) umfaßt, einerseits mit einem innen glatten, durch eine Schraube (8) Gewinde zu bohrenden und sich direkt vor der besagten Öffnung (7) erstreckenden Schaft (6) versehen ist und andererseits mit einer Vielzahl von Höckern oder ähnlichem (11), die die Befestigung der Fußplatte (3) auf einem durch besagten Schaft (6) durchkreuzten beliebigen Element (12) erlaubt.

2. Teil gemäß Anspruch 1, dadurch gekennzeichnet, daß die vorgenannte Fußplatte (3) auf der Höhe des Ansatzes jedes Zackens (4) einen Höcker (11) umfaßt.

3. Teil gemäß Anspruch 1 oder 2, dadurch gekennzeichnet, daß die vorgenannten Höcker (11) aus einem auf der Fußplatte (3) praktizierten Vollprägen hervorgegangen sind.

4. Teil gemäß einem der vorherigen Ansprüche, dadurch gekennzeichnet, daß die vorgenannte Fußplatte (3) die Form eines Dreiecks aufweist, von denen jedes Oberteil einen Zacken (4) umfaßt, an dessen Ansatz ein Höcker (11) vorgesehen ist.

5. Geschweißte Verbindung des Teils gemäß Ansprüchen 1 bis 4 und einem beliebigen Element (12).

## Claims

1. Anti-rotation element (1) for an electric connection cable eye stiffener (2) and of the type including a base (3) which firstly is provided with an opening (7) for the passage of a screw (8) and which secondly comprises on its circumference and projecting from one of its faces (10) teeth (4) defining a number of notches corresponding exactly to the number of angular positions for the cable eye stiffener (2), characterised in that the face (20) of the base (3) opposite the face (10) comprising the teeth (4) is firstly equipped with an internally smooth shaft (6) able to screwed by the screw (8) and extending to the right of said opening (7), and secondly a plurality of bosses or similar elements (11) for welding the base (3) on any element (12) traversed by said shaft (6).

2. Element according to claim 1, characterised in that said base(3) comprises a boss (11) at the level of the root of each teeth (4).

3. Element according to claim 1 or 2, characterised in that said bosses result from a drawing operation made on the base (3).

4. Element according to one of the preceding claims, characterised in that said base (3) has the shape of a triangle, each top comprising a tooth (4), a boss (11) being provided at the root of said tooth.

5. Welded assembling of the element according to one of claims 1 to 4, and of any element (12).
